# EUROPÄISCHE PATENTANMELDUNG

(11) **EP 0 640 640 A1**
(43) Veröffentlichungstag der Anmeldung: **01.03.1995**
(21) Anmeldenummer: 94112799.5
(22) Anmeldetag: 17.08.1994
(51) Int. Cl.: C08G 65/46, C08J 3/12, C08J 3/14

(54) **Polyarylenetheragglomerate**

(30) Priorität: 27.08.1993 DE 4328873
(71) Anmelder: BASF Aktiengesellschaft, D-67063 Ludwigshafen (DE)
(72) Erfinder: Heitz, Thomas, Dr., D-67125 Dannstadt-Schauernheim (DE); Müller, Frank, Dr., D-67071 Ludwigshafen (DE); Wolf, Peter, Dr., D-67227 Frankenthal (DE)

(57) **Zusammenfassung**

Polyarylenetheragglomerate erhältlich aus Polyarylenetherflocken oder Polyarylenetherpulvern durch Einwirken von Scherkräften unter Druck bei Temperaturen zwischen der Glasübergangstemperatur T_{g} und dem Schmelzpunkt Tₘ des jeweiligen Polyarylenethers.

## Beschreibung

Die vorliegende Erfindung betrifft Polyarylenetheragglomerate, die aus Polyarylenetherflocken oder Polyarylenetherpulvern durch Einwirken von Scherkräften unter Druck bei Temperaturen zwischen der Glasübergangstemperatur T_{g} und dem Schmelzpunkt Tₘ des jeweiligen Polyarylenethers erhältlich sind. Ferner betrifft die vorliegende Erfindung ein Verfahren zur Herstellung dieser Polyarylenetheragglomerate sowie deren Verwendung zur Herstellung von Fasern, Filmen, Folien, Formkörpern oder Beschichtungen.

Eine Methode um gebrauchte Kunststoffe wie Teppichbodenabfälle, Faserabfälle aus Polyethylenterephthalat, Polypropylen oder Polyamid, oder Hausmullkunststoffanteile wieder aufzuarbeiten bestehen darin, diese zu vermahlen und anschließend mittels eines sogenannten Plast-Agglomerators oder Plast-Compaktors, z.B. einem Scherwalzencompaktor zu einem unregelmäßig geformten granulatartigen Material zu formen. In einem Scherwalzencompaktor wird der Kunststoff im Spalt zwischen zwei horizontal, hintereinander angeordneten, rotierenden Walzen bei Temperaturen von 20 bis 280°C bewegt. Hierdurch lagert sich das Mahlgut aneinander, agglomeriert und verdichtet. Die im gebrauchten Kunststoff meist vorhandenen Fremdstoffe oder Schmutzpartikel werden durch diese Behandlung so weit zerkleinert und in der Kunststoffmatrix dispergiert, daß sie als inerte Füllstoffe wirken (M. Fass: Kunststoffberater 1993 (3), 28-31).

Polyarylenether, insbesondere Polyarylenetherketone fallen bei ihrer Herstellung häufig als Flocken sehr geringer Dichte oder pulverförmig an. In dieser Form lassen sie sich nur schwer handhaben oder verarbeiten. Daher werden Polyarylenether aus der Schmelze heraus granuliert. Während des Granulierens entstehen dunkel gefärbte Abbauprodukte, die sich im Granulat und den daraus hergestellten Artikeln als schwarze Punkte bemerkbar machen. Die Zahl der schwarzen Punkte pro Flächeneinheit ist ein Maß für die entstandene Verunreinigung der Polyarylenether.

Üblicherweise wurden den Polyarylenethern daher Antioxidantien (z.B. DE-A1-24 19 044) oder Phosphorverbindungen als Stabilisatoren (z.B. DE-A1-4 022 213) zugesetzt. In der EP-A1-197 727 wird die Verwendung von Molekularsieben zur Stabilisierung von Polyarylenetherketonen beschrieben. Derartige Zusätze verteuern das Produkt und sind zum Teil toxisch.

Aufgabe der vorliegenden Erfindung war es deshalb, Polyarylenether mit höherem Reinheitsgrad und geringem Gelanteil in einer Form zur Verfügung zu stellen, in der sich die Polyarylenether gut verarbeiten lassen.

Diese Aufgabe wird von den erfindungsgemäßen Polyarylenetheragglomeraten gelöst.

Zur Herstellung der erfindungsgemäßen Polyarylenetheragglomerate eignen sich vor allem teilkristalline Polyarylenether die fein zerteilt beispielsweise als feines Pulver oder in Form von Flocken vorliegen. Die Schüttdichte dieser Polyarylenflocken oder -pulver beträgt im allgemeinen 40 bis 200 g/l.

Sie kann aber auch darunter liegen, beispielsweise bis 35 oder 30 g/l. Ebenso kann sie darüber liegen, beträgt aber meist nicht mehr als 220 bis 250 g/l.

Bevorzugte Polyarylenether enthalten sich wiederholende Einheiten allgemeinen Formel I 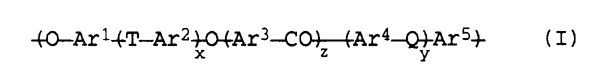
Darin können Ar¹ bis Ar⁵ gleich oder verschieden voneinander sein und unabhängig voneinander einen aromatischen Rest mit 6 bis 18 C-Atomen bedeuten. Beispiele geeigneter Reste Ar¹ bis Ar⁵ sind Phenylen, Bisphenylen, Terphenylen, 1,5-Naphthylen, 1,6-Naphthylen, 1,5-Anthrylen, 9,10-Anthrylen oder 2,6-Anthrylen. Darunter werden 1,4-Phenylen und 4,4'-Biphenylen bevorzugt. Vorzugsweise sind diese aromatischen Reste nicht substituiert. Sie können jedoch einen oder mehrere Substituenten tragen. Geeignete Substituenten sind beispielsweise Alkyl-, Arylalkyl-, Aryl-, Nitro-, Cyano- oder Alkoxygruppen sowie Heteroaromaten wie Pyridin und Halogenatome. Zu den bevorzugten Substituenten zählen Alkylreste mit bis zu 10 Kohlenstoffatomen wie Methyl, Ethyl, i-Propyl, n-Hexyl, i-Hexyl, C₁- bis C₁₀-Alkoxyreste wie Methoxy, Ethoxy, n-Propoxy, n-Butoxy, Arylreste mit bis zu 20 Kohlenstoffatomen wie Phenyl oder Naphthyl sowie Fluor und Chlor. T und Q können gleich oder verschieden voneinander sein und unabhängig voneinander -O-, -S-, -SO₂-, -CO- oder -COO- bedeuten, worunter -O- und -CO- bevorzugt sind.

Die Variablen x und y können gleich oder verschieden voneinander sein und unabhängig voneinander eine ganze Zahl von 0 bis 3 bedeuten. Die Variable z ist entweder 0 oder 1.

Besonders bevorzugt werden Polyphenylenether, insbesondere Polyphenylenetherketone eingesetzt. Als Beispiele bevorzugter Polyarylenether sind solche zu nennen, die sich wiederholende Einheiten ausgewählt aus der Gruppe der Einheiten II 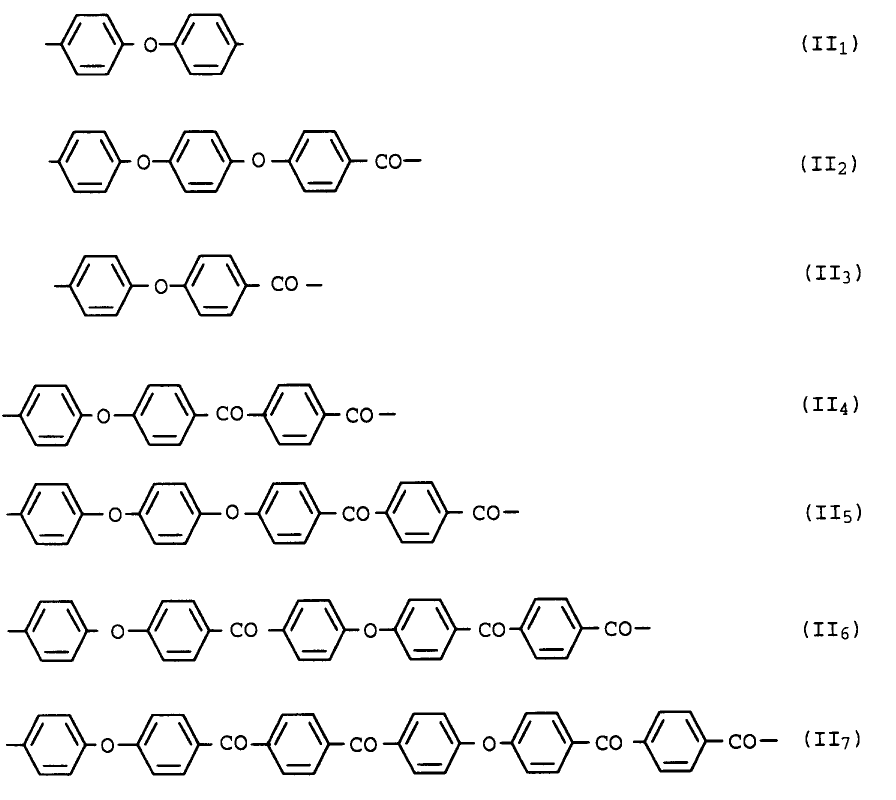
allein oder in Verbindung mit anderen Einheiten enthalten.

Die Polyarylenether können auch statistische oder geordnete Copolymere wie alternierende oder Blockcopolymere sein. Es können auch Mischungen unterschiedlicher Polyarylenether verwendet werden. In der Regel weisen die Polyarylenether Schmelzvolumenindices (MVI) von 5 bis 350 cm³/10 min (gemessen nach DIN 53 735, bei 400°C und einer Belastung von 10 kg) auf. Bevorzugt werden Polyarylenether mit Schmelzvolumenindices von 25 bis 250 cm³/10 min (gemessen nach DIN 53 735, bei 400°C und einer Belastung von 10 kg). In der Regel betragen die reduzierten Viskositäten der Polyarylenether 30 bis 170 ml/g, bevorzugt 50 bis 150 ml/g, besonders bevorzugt 80 bis 140 ml/g. Die reduzierten Viskositäten werden je nach Löslichkeit der Polyarylenether entweder in 1 gew.-%iger N-Methylpyrrolidon-Lösung, in Mischungen aus Phenol und Dichlormethan oder in 96 %iger Schwefelsäure bei jeweils 20°C bzw. 25°C gemessen.

Die in Betracht kommenden Polyarylenether sind an sich bekannt und können nach an sich bekannten Methoden hergestellt werden. Polyarylenether entstehen z.B. durch Kondensation aromatischer Bishalogenverbindungen und den Alkalidoppelsalzen aromatischer Bisphenole. Sie können beispielsweise auch durch Selbstkondensation von Alkalisalzen aromatischer Halogenphenole in Gegenwart eines Katalysators hergestellt werden. Geeignete Verfahren werden unter anderem in der US-A-3 441 538, 4 108 837, der DE-A1-27 38 962 und der EP-A1-361 beschrieben. Polyarylenether, die Carbonylfunktionen enthalten, sind auch durch elektrophile (Friedel-Crafts-Polykondensation zugänglich, wie unter anderem in der WO 84/03892 beschrieben. Bei der elektrophilen Polykondensation werden zur Bildung der Carbonylbrücken entweder Dicarbonsäurechloride oder Phosgen mit Aromaten, welche zwei - durch elektrophile Substituenten austauschbare - Wasserstoffatome enthalten, umgesetzt, oder es wird ein aromatisches Carbonsäurechlorid, das sowohl eine Säurechloridgruppe als auch ein substituierbares Wasserstoffatom enthält, mit sich selbst polykondensiert.

Zur Herstellung der erfindungsgemäßen Polyarylenetheragglomerate werden die Polyarylenetherflocken oder -pulver bei Temperaturen zwischen der Glasübergangstemperatur T_{g} und dem Schmelzpunkt Tₘ Scherkräften ausgesetzt. Durch die Reibung bauen sich dabei Drucke auf, die auf das Material einwirken. Zusätzlich können die Drucke von außen verstärkt werden. Hierdurch agglomerieren die feinen Partikel.

Die Herstellung der erfindungsgemäßen Polyarylenetheragglomerate kann prinzipiell mittels verschiedener Techniken ausgeführt werden, solange die Scherkräfte und der während der Verarbeitung entstehende oder zusätzlich von außen aufgebrachte Druck im angegebenen Temperaturbereich die Agglomeration der Polyarylenetherflocken oder -pulvern gewährleisten. Bevorzugt wird während der Agglomeration der Polyarylenetherflocken kein zusätzlicher Druck von außen ausgeübt. In Betracht kommen Vorrichtungen, die eine Dosiereinheit, eine Einheit aufweisen, in der die Verdichtung vorgenommen werden kann und eine Abnahmeeinheit enthalten. Das Verfahren kann sowohl kontinuierlich als auch diskontinuierlich sein. Als Dosiereinheit kommen insbesondere Trichter, die vorzugsweise mit einer Fördereinheit, z.B. einer Schnecke, ausgerüstet sind. Druck und Scherkräfte können z.B. durch gegeneinander bewegliche Platten, Stempel, Rotoren, Scheiben, insbesondere konische Beanspruchungsscheiben oder Walzen, worunter Rotoren oder konische Beanspruchungsscheiben bevorzugt sind, aufgebaut werden. Im allgemeinen betragen die Umfangsgeschwindigkeiten der Rotoren oder konischen Beanspruchungsscheiben von 10 bis 120 m/s. Bevorzugte Umfangsgeschwindigkeiten sind von 20 bis 100 m/s, insbesondere 30 bis 80 m/s. Der Antrieb der beweglichen Teile kann sowohl elektrisch als auch hydraulisch erfolgen. In der Abnahmeeinheit wird die verdichtete Polyarylenethermasse zu den erfindungsgemäßen Polyarylenetheragglomeraten geformt. Dies geschieht vorzugsweise dadurch, daß die Polyarylenethermasse durch eine Lochmatrize gepreßt und mittels eines Messers abgetrennt wird. Um eine gleichmäßigere Verteilung der so erhaltenen zylinderförmigen unregelmäßig geformten Polyarylenetheragglomerate zu erhalten, können sich noch Siebe oder Sichter, bevorzugt Zick-Zack-Sichter anschließen. Ausgesiebtes Material kann beispielsweise wieder zur Dosiereinheit zurückgeführt werden. Besonders bevorzugt werden Plast-Agglomatoren oder Scherwalzencompactoren verwendet.

Die Temperaturen, bei denen die Verdichtung vorgenommen wird, liegen oberhalb der Glasübergangstemperatur Tg des Polyarylenethers und betragen im allgemeinen mehr als 250°C. Die Verdichtung findet bei Temperatur unterhalb des Schmelzpunktes des jeweiligen Polyarylenethers statt und betragen meist nicht mehr als 380°C, insbesondere nicht mehr als 360°C. In der Regel sind Temperaturen von 260°C bis 320°C vorteilhaft.

Die Form der Bohrung der Lochmatrize bestimmt neben der Frequenz mit der die durch die Lochmatrize gedrückte Masse abgeschnitten wird und dem verwendeten Sieb die Größe und Form der erhaltenen erfindungsgemäßen Polyarylenetheragglomerate.

Gemäß einer Ausführungsform können den Polyarylenetherflocken vor oder während des Agglomerierens Zusatzstoffe, Verarbeitungsmittel oder deren Mischungen zugesetzt werden. Als Zusatzstoffe kommen sowohl faser- als auch teilchenförmige Füllstoffe in Betracht. Als Beispiele seien Quarz, Wollastonit, Talkum, Glasfasern, Metallfasern, Carbonfasern oder Aramidfasern genannt. Zu den Verarbeitungshilfsmitteln zählen fluorierte Kohlenwasserstoffe wie Polytetrafluorethylen oder Metallseifen wie Metallstearate oder Metallpalmitate. Für manche Anwendungen kann es vorteilhaft sein, daß die erfindungsgemäßen Polyarylenetheragglomerate zusätzlich Stabilisatoren, bevorzugt Aluminosilikate wie Natriumaluminosilikat, enthalten, die während der Agglomeration zugesetzt werden.

Die erfindungsgemäßen Polyarylenetheragglomerate sind im allgemeinen unregelmäßig geformte Zylinder. Ihre Schnittdichte beträgt im allgemeinen 300 bis 700 g/l, bevorzugt 400 bis 600 g/l. Die erfindungsgemäßen Polyarylenetheragglomerate zeichnen sich durch ihre höhere Reinheit und geringeren Gelgehalt gegenüber Polyarylenethergranulat aus. Sie eignen sich zum Herstellen von Fasern, Folien oder Formkörpern. Beispielsweise können Profile und Halbzeuge hergestellt werden. Ebenso können z.B. Kabel beschichtet oder ummantelt werden.

### Beispiele

Als Polyarylenether wurden jeweils Polyarylenetherketone aus Einheiten der Struktur II₆ 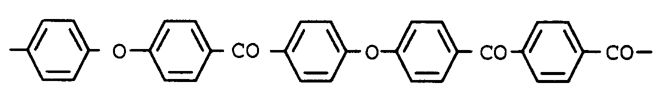
unterschiedlicher inhärenter Viskositäten und Schmelzvolumenindices eingesetzt. Die inhärente Viskosität (ηᵢₙₕ) wurde jeweils bei 25°C anhand einer 0,5 gew.-%igen Lösung in 96 gew.-%iger Schwefelsäure gemessen. Der Schmelzvolumenindex (MVI) wurde bei einer Belastung von 10 kg bei 420°C und der angegebenen Standzeit bestimmt. Der Betrag der Differenz der Schmelzvolumenindices bei unterschiedlichen Standzeiten (Δ MVI) ist ein Maß für die Schmelzstabilität der Polyarylenetherketone.

Die Polyarylenetherketone lagen jeweils als flockenförmiges unregelmäßiges Pulver einer mittleren Korngröße von 1,5 mm und einer Schüttdichte von 70 g/l vor.

Aus den Polyarylenetherketonflocken wurden erfindungsgemäße Agglomerate sowie Granulate zum Vergleich dargestellt. Die Flocken, Agglomerate sowie Granulate wurden durch 6-minütiges Verpressen bei 400°C zu Pressplatten geformt. Der Gehalt von mit bloßem Auge sichtbaren schwarzen Punkten pro 48,3 cm² wurde als Maß für die Reinheit bzw. Schädigung der Polyarylenetherketone ermittelt.

Die Flocken, Agglomerate und Granulate wurden außerdem mittels eines Einwellenextruders mit einem Schneckendurchmesser von 45 mm und einem Länge/Durchmesser-Verhältnis von 25:1 und einer Drehzahl von 10/min extrudiert. Der jeweils erreichte Durchsatz wurde als Maß für die Verarbeitbarkeit bestimmt.

Die Flocken wurden mittels eines Plastagglomerators (Plastcompactor PVF 250/40 der Firma Pallmann), der mit einer Dosiereinheit und einer Abnahmeeinheit bestehend aus einer Lochmatrize, einer Schneidmühle und einem Zick-Zack-Sichter sowie einer Ruckführeinrichtung für ausgesiebtes Material ausgestattet war, unter den angegebenen Bedingungen verdichtet. Der Durchmesser des Agglomeratorraumes betrug jeweils 250 mm. Die Matrizenlochung hatte einen Durchmesser von 3,2 mm und der Durchsatz während des Agglomerierens betrug jeweils 170 kg/h. Mittels eines Pyrometers wurde jeweils die Temperatur in der Lochmatrize gemessen.

### Beispiel 1

### Ausgangsmaterial:

| | |
|---|---|
| Polyarylenetherketonflocken | ηᵢₙₕ = 1,07 |
| Pressplatten: | hellbeige Gehalt an Punkten: 2 bis 5 |
| Extrusion: | Durchsatz 2 kg/h |

### Agglomerationsbedingungen:

| | |
|---|---|
| Temperatur in der Matrize: | 345°C |
| Schneidmühlensieb: | Durchmesser 10 mm |

### Produkteigenschaften des erhaltenen Agglomerates:

| | |
|---|---|
| Schnittdichte: | 520 g/l |
| Pressplatten: | hellbeige Gehalt an Punkten: 2 bis 5 |
| Extrusion: | Durchsatz 5 kg/h |

### Beispiel 2

### Ausgangsmaterial:

| | |
|---|---|
| Polyarylenetherketonflocken | ηᵢₙₕ = 1,07 |
| Pressplatten: | hellbeige Gehalt an Punkten: 2 bis 5 |
| Extrusion: | Durchsatz 2 kg/h |

### Agglomerationsbedingungen:

| | |
|---|---|
| Temperatur in der Matrize: | 345°C |
| Schneidmühlensieb: | Durchmesser 6 mm |

### Produkteigenschaften des Agglomerates:

| | |
|---|---|
| Schnittdichte: | 520 g/l |
| Pressplatten: | hellbeige Gehalt an Punkten: 4 bis 6 |
| Extrusion: | Durchsatz 5 kg/h |

### Beispiel 3

### Ausgangsmaterial:

| | |
|---|---|
| Polyarylenetherketonflocken | ηᵢₙₕ = 0,92 |
| Extrusion: | Durchsatz 2 kg/h |

### Agglomerationsbedingungen:

| | |
|---|---|
| Temperatur in der Matrize: | 300°C |
| Schneidmühlensieb: | Durchmesser 10 mm |

### Produkteigenschaften des Agglomerates:

| | |
|---|---|
| Schüttdichte: | 520 g/l |
| Pressplatten: | hellbeige Gehalt an Punkten: 2 bis 5 |
| Extrusion: | Durchsatz 5 kg/h |
| MVI₄ₘᵢₙ = | 104,9 cm³ |
| MVI₃₀ₘᵢₙ = | 51,08 cm³ |
| \|Δ MVI \| = | 53,8 cm³ |

### Beispiel 4

### Ausgangsmaterial:

Polyarylenetherketonflocken wie unter Beispiel 3, jedoch wurde den Polyarylenetherketonflocken vor dem Agglomerieren 0,5 Gew.-% Natriumalumosilikat und 0,25 Gew.-% Polytetrafluorethylen-Pulver (jeweils bezogen auf das Gesamtgewicht) zugesetzt.

| | |
|---|---|
| Extrusion: | Durchsatz 2 kg/h |

### Agglomerationsbedingungen:

| | |
|---|---|
| Temperatur in der Matrize: | 300°C |
| Schneidmühlensieb: | Durchmesser 10 mm |

### Produkteigenschaften des Agglomerates:

| | |
|---|---|
| Schüttdichte: | 450 g/l |
| Pressplatten: | hellbeige Gehalt an Punkten: 3 bis 5 |
| Extrusion: | Durchsatz 5 kg/h |
| MVI₄ₘᵢₙ = | 111,4 cm³ |
| MVI₃₀ₘᵢₙ = | 81,25 cm³ |
| \|Δ MVI \| = | 31,15 cm³ |

### Beispiel 5

### Ausgangsmaterial:

| | |
|---|---|
| Polyarylenetherketonflocken | ηᵢₙₕ = 0,90 |

Vor dem Agglomerieren wurde den Polyarylenetherketonflocken 0,5 Gew.-% Natriumalumosilikat und 0,25 Gew.-% Polytetrafluorethylen-Pulver (jeweils bezogen auf das Gesamtgewicht) zugesetzt.

| | |
|---|---|
| Extrusion: | Durchsatz 2 kg/h |

### Agglomerationsbedingungen:

| | |
|---|---|
| Temperatur in der Matrize: | 270°C |
| Schneidmühlensieb: | Durchmesser 10 mm |

### Produkteigenschaften des Agglomerates:

| | |
|---|---|
| Schüttdichte: | 470 g/l |
| Pressplatten: | hellbeige Gehalt an Punkten: 3 bis 5 |
| Extrusion: | Durchsatz 5,5 kg/h |
| MVI₄ₘᵢₙ = | 112,2 cm³ |
| MVI₃₀ₘᵢₙ = | 82,77 cm³ |
| \|Δ MVI \| = | 29,43 cm³ |

### Vergleichsbeispiel 1

### Ausgangsmaterial:

| | |
|---|---|
| Polyarylenetherketonflocken | ηᵢₙₕ = 1,07 |
| Pressplatten: | hellbeige Gehalt an Punkten: 2 bis 5 |
| Extrusion: | Durchsatz 2 kg/h |

### Granulierbedingungen:

| | |
|---|---|
| Temperatur des Schmelzstranges: | 396°C |

### Produkteigenschaften des Granulates:

| | |
|---|---|
| Schüttdichte: | 800 g/l |
| Pressplatten: | hellbraun Gehalt an Punkten: 14 bis 19 |
| Extrusion: | Durchsatz 6 kg/h |

### Vergleichsbeispiel 2

### Ausgangsmaterial:

Polyarylenetherketonflocken wie unter Beispiel 3, jedoch wurde den Polyarylenetherketonflocken vor dem Agglomerieren 0,5 Gew.-% Natriumalumosilikat und 0,25 Gew.-% Polytetrafluorethylen-Pulver (jeweils bezogen auf das Gesamtgewicht) zugesetzt.

### Granulierbedingungen:

| | |
|---|---|
| Temperatur des Schmelzstranges: | 394°C |

### Produkteigenschaften des Granulates:

| | |
|---|---|
| Schüttdichte: | 810 kg/l |
| Pressplatten: | hellbraun Gehalt an Punkten: 10 bis 13 |
| Extrusion: | Durchsatz: 6,5 kg/h |
| MVI₄ₘᵢₙ = | 110 cm³ |
| MVI₃₀ₘᵢₙ = | 75,8 cm³ |
| \|Δ MVI \| = | 34,2 cm³ |

### Beispiel 6

### Ausgangsmaterial:

| | |
|---|---|
| Polyarylenetherketonflocken: | ηᵢₙₕ = 0,93 |

Vor dem Agglomerieren wurde den Polyarylenetherketonflocken 0,5 Gew.-% Natriumalumosilikat und 0,25 Gew.-% Polytetrafluorethylen-Pulver (jeweils bezogen auf das Gesamtgewicht) zugesetzt.

| | |
|---|---|
| Extrusion: | Durchsatz 2 kg/h |

### Agglomerationsbedingungen

| | |
|---|---|
| Temperatur in der Matrize: | 310°C |
| Schneidemühlensieb: | Durchmesser 10 mm |

### Produkteigenschaften des Agglomerates:

| | |
|---|---|
| Schüttdichte: | 500 g/l |
| Pressplatte: | hellbeige Gehalt an Punkten: 3 bis 5 |
| Extrusion: | Durchsatz 5 kg/h |
| MVI₄ₘᵢₙ = | 120,8 cm³ |
| MVI₃₀ₘᵢₙ = | 93,85 cm³ |
| \|Δ MVI \| = | 26,95 cm³ |

### Vergleichsbeispiele

Die Polyarylenetherketonflocken wurden unter Verwendung eines gleichläufigen, kämmenden Zweischneckenextruders (Typ ZSK 53 der Firma Werner & Pfleiderer) unter Verwendung einer Vakuumentgasungseinheit für die Schmelze aufgeschmolzen und der Schmelzstrang nach dem Abkühlen granuliert. Die Temperatur des aus dem Düsenkopf austretenden Schmelzstrangs wurde mittels eines Pyrometers bestimmt.

## Patentansprüche

1. Polyarylenetheragglomerate erhältlich aus Polyarylenetherflocken oder Polyarylenetherpulvern durch Einwirken von Scherkräften unter Druck bei Temperaturen zwischen der Glasübergangstemperatur T_{g} und dem Schmelzpunkt Tₘ des jeweiligen Polyarylenethers.

2. Polyarylenetheragglomerate nach Anspruch 1, in denen die Polyarylenether sich wiederholende Einheiten der allgemeinen Formel I 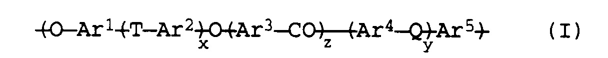 enthalten, in der Ar¹ bis Ar⁵ gleich oder verschieden voneinander sein können und unabhängig von einander einen aromatischen Rest mit 6- bis 18 C-Atomen darstellen, T und Q gleich oder verschieden voneinander sein können und unabhängig voneinander -O-, -S-, -SO₂-, -CO- oder -COO- bedeuten können, x und y gleich oder verschieden voneinander sein können und unabhängig voneinander eine ganze Zahl von 0 bis 3 sein können und z 0 oder 1 sein kann.

3. Polyarylenetheragglomerate nach Anspruch 1 oder 2 in denen die Polyarylenether sich wiederholende Einheiten ausgewählt aus der Gruppe der Einheiten II 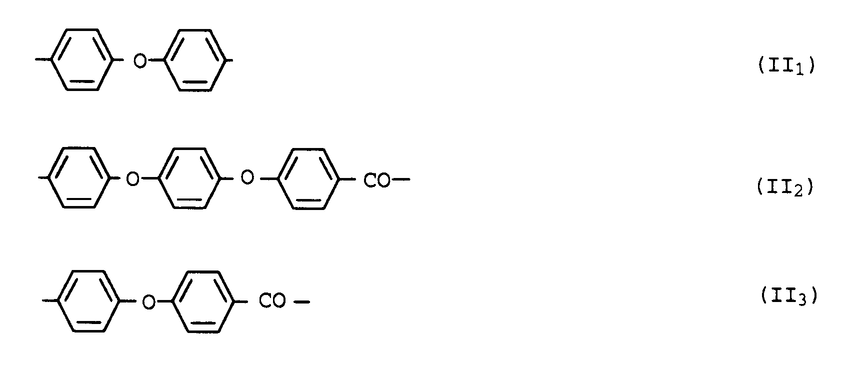 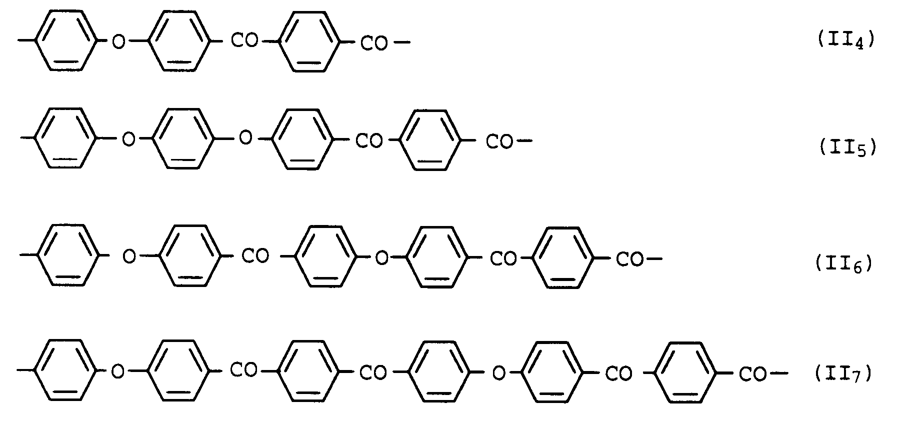 allein oder in Verbindung mit anderen Einheiten enthält.

4. Polyarylenetheragglomerate nach einem der Ansprüche 1 bis 3, erhältlich bei Temperaturen von 250 bis 380°C.

5. Polyarylenetheragglomerate nach einem der Ansprüche 1 bis 4 mit einer Schüttdichte von 300 bis 700 g/l.

6. Verfahren zur Herstellung von Polyarylenetheragglomeraten, dadurch gekennzeichnet, daß man Polyarylenetherflocken durch Einwirken von Scherkräften unter Druck bei Temperaturen zwischen der Glasübergangstemperatur T_{g} und dem Schmelzpunkt Tₘ des jeweiligen Polyarylenethers verdichtet.

7. Verfahren nach Anspruch 6, dadurch gekennzeichnet, daß man den Polyarylenetherflocken vor oder während des Einwirkens der Scherkräfte Zusatzstoffe oder Verarbeitungshilfsmittel oder deren Mischungen zusetzt.

8. Verwendung der Polyarylenetheragglomerate gemäß einem der Ansprüche 1 bis 5 zur Herstellung von Fasern, Filmen, Folien, Formkörpern oder Beschichtungen.

9. Fasern, Filme, Folien, Formkörper oder Beschichtungen hergestellt unter Verwendung der Polyarylenetheraggomerate gemäß einem der Ansprüche 1 bis 5.
